# EUROPÄISCHE PATENTSCHRIFT

(11) **EP 0 339 378 B1**
(45) Veröffentlichungstag und Bekanntmachung des Hinweises auf die Patenterteilung: **09.02.1994**
(21) Anmeldenummer: 89106571.6
(22) Anmeldetag: 13.04.1989
(51) Int. Cl.: C08L 67/02, C08K 3/34, C08K 3/32, C08G 63/78, C08K 9/02, C08K 9/04, C09C 1/42, C09C 3/06, C09C 3/08

(54) **Verfahren zur Herstellung linearer Polyester, insbesondere für Filme und Folien**
Process for the production of linear polyesters, particularly for films and foils
Procédé pour la production de polyesters linéaires, en particulier pour films et feuilles

(30) Priorität: 26.04.1988 DE 3814022
(43) Veröffentlichungstag der Anmeldung: 02.11.1989
(73) Patentinhaber: Zimmer Aktiengesellschaft, D-60388 Frankfurt (DE)
(72) Erfinder: Thiele, Ulrich, Dr., D-6454 Bruchköbel (DE)

(56) Entgegenhaltungen:
- US-A- 2 302 361
- US-A- 3 511 801
- WPIL, AN=86-098666; & JP-A-61 044 922

## Beschreibung

Die Erfindung betrifft ein Verfahren zur Herstellung von linearen Polyestern oder Copolyestern unter Zugabe von Aluminiumsilikat-Ethylenglykol-Suspension zum Reaktionsgemisch. Insbesondere betrifft die Erfindung Polyester mit geringem Diethylenglykol-Gehalt für Filme und Folien.

Polyester für Filme und Folien werden üblicherweise hergestellt, indem feinverteilte, inerte Partikel dem Reaktionsgemisch zugesetzt oder in diesem durch Fällung gebildet werden. Diese Maßnahme ist erforderlich, um dem Material einerseits günstige Wickel- und Gleiteigenschaften und andererseits eine möglichst glatte, gleichmäßige Oberfläche zu verleihen. Als Zusatzstoff wird unter anderem Kaolin, bevorzugt mit einem Partikeldurchmesser von maximal 1 µm, verwendet (US Patent 4 654 249).

Es hat sich jedoch gezeigt, daß Aluminiumsilikate, wie Kaolin, als Naturstoffe stets Begleitsubstanzen enthalten, die das gewünschte inerte Verhalten der Partikel im Herstellungsprozeß des Polyesters nicht gewährleisten. So wird beim Zusatz natürlicher Aluminiumsilikate zur Polyestersynthese, bei der die Glykolkomponente aus Ethylenglykol besteht, je nach Prozeßbedingungen eine mehr oder weniger ausgeprägte Bildung von Diethylenglykol (DEG) beobachtet. Wegen des Einflusses auf die Polyester-Eigenschaften ist diese jedoch unerwünscht. Für hochqualitative Filme sollte der DEG-Gehalt im allgemeinen etwa 1,5 % nicht überschreiten. Eine besonders starke DEG-Bildung ist zu beobachten, wenn bei der Direktveresterung von zum Beispiel Terephthalsäure mit Ethylenglykol die Aluminiumsilikat-Suspension der Monomer-Paste zugemischt wird oder wenn bei der diskontinuierlichen Umesterung von zum Beispiel Dimethylterephthalat mit Ethylenglykol produktionsbedingt längere Standzeiten des mit Aluminiumsilikat versetzten Reaktionsproduktes auftreten.

Ausgehend von dieser Erkenntnis liegt der vorliegenden Erfindung die Aufgabe zugrunde, das eingangs genannte Verfahren zur Herstellung linearer Polyester so zu modifizieren, daß das inerte Verhalten der zugesetzten Aluminiumsilikat-Partikel unabhängig von deren Verweilzeit in der Reaktionsmasse gewährleistet ist, beziehungsweise, daß Polyester erhalten werden, welche gegenüber dem aufgezeigten Stand der Technik einen geringen DEG-Gehalt aufweisen.

Erfindungsgemäß wird diese Aufgabe dadurch gelöst, daß bei dem eingangs genannten Verfahren zur Herstellung linearer Polyester dem Aluminiumsilikat vor oder während der Suspendierung im Ethylenglykol eine saure Phosphorverbindung zugesetzt wird, wobei das Verhältnis der im Aluminiumsilikat enthaltenen Fremdmetall-Atome zu den Phosphor-Atomen 0,1 bis 5 beträgt, und anschließend soviel einer alkalischen Verbindung zugesetzt wird, daß die zuzugebende Aluminiumsilikat-Ethylenglykol-Suspension einen mit der Glaselektrode gemessenen pH-Wert im Bereich von 6,1 bis 9,0 aufweist.

Überraschenderweise wurde gefunden, daß eine wesentliche Senkung des DEG-Gehaltes nur eintritt, wenn zuerst die Phosphorverbindung zugesetzt wird und anschließend die alkalische Verbindung. Jegliche andere Reihenfolge erwies sich als wirkungslos. Ohne Bedeutung ist es jedoch, ob die Zugabe während der Suspendierung des Aluminiumsilikats im Ethylenglykol erfolgt oder bereits während einer vorangehenden Aufbereitungsstufe in wässriger oder trockener Phase.

Da Polyester-Hersteller die Aufbereitung der Aluminiumsilikate meist nicht selbst vornehmen, kommt der Behandlung während der Suspendierung in Ethylenglykol eine bevorzugte Rolle zu.

Als Phosphorverbindungen eignen sich alle sauren Phosphorverbindungen wie Phosphorsäure, phosphorige Säure, deren lösliche saure Salze oder deren saure Ester, aber auch Phosphonsäuren, wobei die beiden erstgenannten Verbindungen bevorzugt werden. Um ein Maß für die zuzusetzende Menge an Phosphorverbindungen zu erhalten, ist es erforderlich, zunächst den Gesamtgehalt im Aluminiumsilikat an Fremdmetallionen wie Eisen, Mangan, Chrom, Zink, Cobalt, Nickel und Kupfer, zum Beispiel durch Atom-Absorptions-Spektroskopie zu bestimmen. Bei handelsüblichen Kaolinen für Polyester-Folien liegt der Fremdmetallionen-Gehalt häufig in der Größenordnung von 0,3 Gew.-%, wobei über 90 % auf Eisen entfallen. Eventuell vorhandenes, ausschließlich als Titandioxid vorliegendes Titan erwies sich bei dem erfindungsgemäßen Verfahren als neutral und bleibt daher unberücksichtigt. Das atomare Verhältnis Fremdmetall zu Phospor sollte zwischen 0,1 und 5, vorzugsweise zwischen 0,5 und 1,5 liegen.

Das resultierende Aluminiumsilikat reagiert leicht sauer. Um das erfindungsgemäß inerte Verhalten der Partikel zu erreichen, ist es erforderlich, anschließend soviel einer alkalischen Verbindung zuzusetzen, daß die - beziehungsweise eine daraus hergestellte - Aluminiumsilikat-Ethylenglykol-Suspension einen p_{H}-Wert im Bereich 6,1 bis 9,0 aufweist. Als alkalische Verbindung eignen sich die Hydroxide von Natrium, Kalium, Lithium, Magnesium, Strontium oder Calcium, aber auch Amine, wie Triethanolamin, Triisopropylamin oder Tetraethylhydroxyammonium. Da aufgrund der großen Oberfläche der feinvermahlenen Aluminiumsilikat-Partikel die p_{H}-Einstellung zeitabhängig ist, muß solange Alkali zugesetzt werden, bis der mit der Glaselektrode gemessene pH-Wert konstant bleibt. Erfolgt die Behandlung während einer vorangehenden Aufarbeitungsstufe, so ist die Alkalimenge durch Vorversuche zu ermitteln.

Im Fall der bevorzugten Behandlung des Aluminiumsilikates während der Suspendierung im Ethylenglykol hat es sich als vorteilhaft herausgestellt, sowohl die Phosphorverbindung als auch die alkalische Verbindung gelöst im Ethylenglykol einzusetzen

Die Zugabe der Aluminiumsilikat-Ethylenglykol-Suspension sollte, um eine möglichst homogene Verteilung im Polyester sicherzustellen, während einer relativ niedrig-viskosen Phase des Polyester-Herstellungsprozesses erfolgen. Da erfindungsgemäß eine vollständige Inertisierung des Aluminiumsilikates erzielt wird, kann die Suspension ohne Nachteile bereits der Monomer-Paste zugegeben werden, aber auch zu jedem beliebigen Zeitpunkt vor oder zu Beginn der Polykondensation. Prinzipiell ist auch eine noch spätere Zugabe möglich, jedoch weniger zweckmäßig. Die Menge Aluminiumsilikat liegt im üblichen Bereich, je nach Verwendung des Polyesters bei 0,01 bis 10,0 Gewichts-% bezogen auf den Polyester, bevorzugt bei 0,1 bis 1,0%.

Das erfindungsgemäße Verfahren, welches sowohl kontinuierlich als auch diskontinuierlich ausgeführt werden kann, eignet sich für alle linearen Polyester, deren Säurekomponente im wesentlichen aus Terephthalat-Einheiten und deren Glykolkomponente aus Ethylenglykol besteht, und für jegliche Aluminiumsilikate natürlichen Ursprungs. Bevorzugtes Anwendungsgebiet sind kaolinhaltige Polyethylenterephthalate für Filme und Folien.

Die Erfindung wird nachfolgend an Hand von Beispielen näher beschrieben, jedoch ohne Beschränkung auf diese. Das verwendete Kaolin R (Hersteller Amberger Kaolin-Werke) enthält nach eigenen Atom-Absorptions-Spektroskopie-Messungen 2616 ppm Fe, neben 4 ppm Ni, 4 ppm Co, 8 ppm Cu und 89 ppm Cr.

### Vergleichsbeispiel 1:

A) 1000 g Kaolin R werden mit 4000 g Ethylenglykol mittels Dissolver (Zahnscheibenrührer) dispergiert und anschließend auf einer Perlmühle vermahlen.
B) Dimethylterephthalat wird mit Ethylenglykol im Mol-Verhältnis 1 : 2,2 unter Verwendung von 80 ppm Mn in Form von Mangandiacetat als Umesterungskatalysator und von 50 ppm P in Form von Trimethylphosphat als Stabilisator bei langsam steigender Temperatur umgesetzt. Bei 225° C beträgt der Umsetzungsgrad 98 %.
   Zu diesem Zeitpunkt werden zu 1000 g dieses Reaktionsproduktes 25 g der Suspension A) gegeben, und das Gemisch in Gegenwart von 280 ppm Sb in Form von Antimontrioxid in 3 h bei einer Temperatur von 279° C und einem Druck von 0,6 mbar polykondensiert.
   Das erhaltene Polyethylenterephthalat weist einen DEG-Gehalt von 1,3 Gew.-% bezogen auf Polyester auf, wobei die Bestimmung gaschromatographisch nach vorangehender Methanolyse erfolgte.

### Vergleichsbeispiel 2:

Es wird genau wie im Vergleichsbeispiel 1 verfahren, jedoch mit dem Unterschied, daß das Gemisch nach Zugabe der Suspension und vor der Polykondensation 1 h bei 230 °C und Normaldruck ohne weitere Reaktion belassen wird.

Der DEG-Gehalt des erhaltenen Polyesters beträgt 2,8 Gew-%.

### Vergleichsbeispiel 3:

Zu 12,5 kg eines Veresterungsproduktes aus Terephthalsäure und Ethylenglykol mit einem Umsetzungsgrad von 98,5 % werden 140 kg einer Paste aus Terephthalsäure und Ethylenglykol des Molverhältnisses 1 : 1,2 bei einer Temperatur von 270° C in einer Zeit von 160 min unter Normaldruck zugespeist. Die Paste enthält 0,5 % Kaolin (bezogen auf den fertigen Polyester), das wie in Vergleichsbeispiel 1 A) aufgearbeitet wurde.

Nach einer weiteren Verweilzeit von 10 min werden 300 ppm Sb als Antimontrioxid zugesetzt und 160 min bei 279° C und 0,6 mbar polykondensiert.

Der DEG-Gehalt des Polyesters beträgt 3,1 Gew-%.

### Vergleichsbeispiel 4:

Es wird wie im Vergleichsbeispiel 3 gearbeitet. Die Zugabe der Kaolin-Suspension erfolgt jedoch erst nach Abschluß der Veresterungsreaktion, unmittelbar vor der Polykondensation.

Der DEG-Gehalt des Polyesters beträgt 1,7 Gew-%.

### Beispiel 1:

A) 1000 g Kaolin R werden mit 4000 g Ethylenglykol mittels Dissolver dispergiert und anschließend auf einer Perlmühle vermahlen. Nach der ersten Passage durch die Mühle beträgt der pH-Wert der Suspension 4,6. Der Suspension werden 5 g Phosphorsäure (80 %ig) in 100 g Ethylenglykol entsprechend einem atomaren Verhältnis Fremdmetall zu Phosphor von 1,2 zugesetzt. Der pH-Wert der Suspension beträgt nach der 2. Passage 4,1. Unter leichtem Rühren wird der Suspension nun soviel 5 %ige KOH-Ethylenglykol-Lösung zugesetzt, bis ein pH-Wert von 7,5 eingestellt ist. Nach einer Stunde Verweilzeit unter leichtem Rühren ist der pH-Wert wieder auf 6,1 gesunken. Es wird erneut mit glykolischer KOH auf pH = 8,0 eingestellt.
B) Die so hergestellte Kaolin-Ethylenglykol-Suspension wird wie in den Vergleichsbeispielen 1 - 4 beschrieben, in den Polyesterprozeß eingebracht.
   Die DEG-Gehalte der Polyester sind in der nachfolgenden Tabelle zusammengestellt.

### Beispiel 2:

A) 1000 g Kaolin R werden mit 4000 g Ethylenglykol mittels Dissolver dispergiert und anschließend auf einer Perlmühle vermahlen.
   Nach der ersten Passage durch die Mühle wird ein pH-Wert von 4,5 gemessen.
   Die Suspension wird durch Zusatz von 5 %iger LiOH-Lösung auf pH = 7,9 eingestellt und fertig vermahlen. Nach der Vermahlung wird im Laufe einer Stunde der pH-Wert durch erneutes Zufügen von LiOH nachgestellt, so daß in der fertigen Suspension ein pH-Wert von 7,9 gemessen wird.
B) Die so hergestellte Kaolin-Ethylenglykol-Suspension wird, wie in den Vergleichsbeispielen 1 - 4 beschrieben, in den Polyesterprozeß eingebracht.
   Die DEG-Gehalte der Polyester sind in der Tabelle zusammengestellt.

### Beispiel 3:

A) Eine Kaolin-Ethylenglykol-Suspension wird in gleicher Weise hergestellt, wie in Beispiel 1 A) beschrieben, jedoch wird an Stelle der Phosphorsäure phosphorige Säure in gleicher Menge entsprechend einem atomaren Verhältnis Fremdmetall zu Phosphor von 1,0 verwendet. Auch entfällt die pH-Einstellung. Die Suspension hat nach ihrer Fertigstellung einen pH-Wert von 4,1.
B) Ohne weitere Zugabe von Alkali wird diese Suspension , wie in den Vergleichsbeispielen 1 - 4 beschrieben, in den Polyesterprozeß eingebracht.
   Die DEG-Gehalte der Polyester sind der Tabelle zu entnehmen.

### Beispiel 4:

A) Es wird, wie in Beispiel 1 A) beschrieben, eine Kaolin-Ethylenglykol-Suspension hergestellt. Die Einstellung des pH-Wertes nach der Säurezugabe auf 7,5 erfolgt jedoch mittels einer 5 %igen Lösung von Triisopropylamin in Ethylenglykol.
B) Die so hergestellte Kaolin-Ethylenglykol-Suspension wird, wie in den Vergleichsbeispielen 1 - 4 beschrieben, in den Polyesterprozeß eingebracht.
   Die DEG-Gehalte der Polyester sind in der Tabelle zusammengestellt.

**Tabelle**

| DEG-Gehalt der erhaltenen Polyester in Gew.-% | | | | | |
|---|---|---|---|---|---|
| Vergleichsbeispiele | | % DEG | | | |
| Nr. | % DEG | Beispiele Nr. | | | |
| | | 1 | 2 | 3 | 4 |
| 1 | 1,3 | 0,6 | 0,9 | 0,8 | 0,7 |
| 2 | 2,8 | 1,3 | 1,9 | 1,8 | 1,2 |
| 3 | 3,1 | 1,0 | 1,5 | 1,6 | 0,9 |
| 4 | 1,7 | 1,0 | 1,3 | 1,4 | 1,0 |

Beispiel 1 und 4 entsprechen der erfindungsgemäßen Verfahrensweise. Beispiel 2 und 3 beschreiben hingegen die Wirksamkeit von je einem Teilschritt. Wie aus der Tabelle leicht ersichtlich, ist nur durch Zusammenwirken beider Teilschritte das erfindungsgemäße, günstige Ergebnis zu erzielen.

## Patentansprüche

1. Verfahren zur Herstellung von linearen Polyestern, deren Säurekomponente im wesentlichen aus Terephthalat-Einheiten und deren Glykolkomponente aus Ethylenglykol besteht, durch Umesterung oder Direktveresterung und nachfolgende Polykondensation unter Verwendung üblicher Katalysatoren und Stabilisatoren sowie unter Zugabe einer Aluminiumsilikat-Ethylenglykol-Suspension, dadurch gekennzeichnet, daß dem Aluminiumsilikat vor oder während der Suspendierung im Ethylenglykol eine saure Phosphorverbindung zugesetzt wird, wobei das Verhältnis der im Aluminiumsilikat enthaltenen Fremdmetall-Atome zu den Phosphor-Atomen 0,1 bis 5 beträgt, und anschließend soviel einer alkalischen Verbindung zugesetzt wird, daß die zuzugebende Aluminiumsilikat-Ethylenglykol-Suspension einen mit der Glaselektrode gemessenen pH-Wert im Bereich von 6,1 bis 9,0 aufweist.

2. Verfahren gemäß Anspruch 1, dadurch gekennzeichnet, daß als Phosphorverbindung eine Verbindung ausgewählt aus der Gruppe Phosphorsäure oder phosphorige Säure oder ein lösliches saures Salz oder ein saurer Ester hiervon oder eine Phosphonsäure oder ein Gemisch mindestens zweier dieser Verbindungen verwendet wird.

3. Verfahren gemäß Anspruch 1, dadurch gekennzeichnet, daß als alkalische Verbindung eine Verbindung ausgewählt aus der Gruppe Alkalihydroxid oder Erdalkalihydroxid oder Triethanolamin oder Triisopropylamin oder Tetraethylhydroxyammonium oder ein Gemisch mindestens zweier dieser Verbindungen verwendet wird.

4. Verfahren gemäß Anspruch 1, dadurch gekennzeichnet, daß als Aluminiumsilikat Kaolin verwendet wird.

5. Verfahren gemäß Anspruch 1, dadurch gekennzeichnet, daß das Atom-Verhältnis Fremdmetall zu Phosphor 0,5 bis 1,5 beträgt.

6. Verfahren gemäß Anspruch 1, dadurch gekennzeichnet, daß die Aluminiumsilikat-Ethylenglykol-Suspension den Monomeren oder dem Reaktionsgemisch zu einem beliebigen Zeitpunkt vor oder zu Beginn der Polykondensation zugegeben wird.

7. Verfahren gemäß Anspruch 1, dadurch gekennzeichnet, daß der Polyester Polyethylenterephthalat ist.

## Claims

1. Process for the production of linear polyesters, the acid component of which consists essentially of terephthalate units and the glycol component of ethylene glycol, by transesterification or direct esterification and thereafter polycondensation with the use of common catalysts and stabilizers and with addition of an aluminium silicate - ethylene glycol - suspension, characterized in that an acidic phosphorus compound is added to the aluminium silicate before or during the suspending in ethylene glycol, whereby the ratio of the foreign metal atoms contained in the aluminium silicate to the phosphorus atoms is 0.1 to 5, and afterwards so much of an alkaline compound is added that the aluminium silicate - ethylene glycol - suspension, which should be added, has a pH value measured with a glass electrode in the range of 6.1 to 9.0.

2. Process according to Claim 1, characterized in that a compound selected from the group phosphoric acid or phosphorus acid or a soluble acidic salt or an acidic ester thereof or a phosphonic acid or a mixture of at least two of these compounds is used as phosphorus compound.

3. Process according to Claim 1, characterized in that a compound selected from the group alkali hydroxide or alkaline earth hydroxide or triethanolamine or triisopropylamine or tetraethylammonium hydroxide or a mixture of at least two of these compounds is used as alkaline compound.

4. Process according to Claim 1, characterized in that kaolin is used as aluminium silicate.

5. Process according to Claim 1, characterized in that the atomic ratio of foreign metal to phosphorus is 0,5 to 1,5.

6. Process according to Claim 1, characterized in that the aluminium silicate - ethylene glycol - suspension is added to the monomers or to the reaction mixture at any time before or at the beginning of the polycondensation.

7. Process according to Claim 1, characterized in that the polyester is polyethylene terephthalate.

## Revendications

1. Procédé pour la production de polyesters linéaires, dont la composante acide est constituée essentiellement par des unités téréphtaliques et la composante glycolique par de l'éthylène glycol, par transestérification ou estérification directe et puis polycondensation avec utilisation de catalyseurs et de stabilisants usuels, ainsi qu'avec addition d'une suspension de silicate d'aluminium et d'éthylène glycol, caractérisé en ce qu'un composé acide de phosphore est ajouté au silicate d'aluminium avant ou durant la suspension dans l'éthylène glycol, le rapport des atomes de métal étranger contenus dans le silicate d'aluminium aux atomes de phosphore étant de 0,1 à 5, et qu'ensuite autant d'un composé alcalin est ajouté, pour que la suspension de silicate d'aluminium et d'éthylène glycol à additioner ait une valeur pH mesurée avec une électrode de verre de 6,1 à 9,0.

2. Procédé selon la revendication 1, caractérisé en ce que comme composé de phosphore un composé choisi parmi le groupe acide phosphorique ou acide phosphoreux ou un sel acide soluble ou un ester acide de ceux-ci ou un acide phosphonique ou un mélange d'au moins deux de ces composés est utilisé.

3. Procédé selon la revendication 1, caractérisé en ce que comme composé alcalin un composé choisi parmi le groupe hydroxyde alcalin ou hydroxyde alcalino-terreux ou triéthanolamine ou triisopropylamine ou tetraéthylhydroxyammonium ou un mélange d'au moins deux de ces composés est utilisé.

4. Procédé selon la revendication 1, caractérisé en ce que comme silicate d'aluminium du kaolin est utilisé.

5. Procédé selon la revendication 1, caractérisé en ce que le rapport atomique du métal étranger au phosphore est de 0,5 à 1,5.

6. Procédé selon la revendication 1, caractérisé en ce que la suspension de silicate d'aluminium et d'éthylène glycol est ajoutée aux monomères ou au mélange de réaction à un moment quelconque avant ou au début de la polycondensation.

7. Procédé selon la revendication 1, caractérisé en ce que le polyester est du polytéréphtalate d'éthylène.
